# EUROPEAN PATENT APPLICATION

(11) **EP 4 271 029 A1**
(43) Date of publication of application: **01.11.2023**
(21) Application number: 21924411.8
(22) Date of filing: 15.12.2021
(51) Int. Cl.: H04W 24/04

(54) **METHOD AND APPARATUS FOR SENDING OR DISPLAYING NETWORK DETECTION RESULT**

(30) Priority: 05.02.2021 CN 202110170822
(71) Applicant: Huawei Technologies Co., Ltd., Shenzhen, Guangdong 518129 (CN)
(72) Inventor: LI, Yalei, Shenzhen, Guangdong 518129 (CN); CHEN, Qihang, Shenzhen, Guangdong 518129 (CN); YIN, Yongbin, Shenzhen, Guangdong 518129 (CN); JIA, Shuai, Shenzhen, Guangdong 518129 (CN)
(74) Representative: Thun, Clemens
(86) International application number: PCT/CN2021/138387
(87) International publication number: WO 2022/166418

(57) **Abstract**

This application provides a method and an apparatus for sending or displaying a network detection result. The method includes: An AP receives fault indication information from a STA, where the fault indication information indicates that a network fault occurs on the STA; the AP obtains a network detection result; and the AP sends the network detection result to the STA based on the fault indication information. In the foregoing solution, the fault indication information is automatically generated after the network fault occurs on the STA, and no user operation is required, so that a user can determine a cause of the network fault when the user does not have professional knowledge. This avoids an unnecessary reputation loss of a mobile phone vendor and a router vendor.

## Description

This application claims priority to Chinese Patent Application No. 202110170822.4, filed with the China National Intellectual Property Administration on February 5, 2021 and entitled "METHOD AND APPARATUS FOR SENDING OR DISPLAYING NETWORK DETECTION RESULT", which is incorporated herein by reference in its entirety.

### TECHNICAL FIELD

This application relates to the communication field, and specifically, to a method and an apparatus for sending or displaying a network detection result.

### BACKGROUND

Wi-Fi is a short-range wireless communication technology. Information is transmitted between Wi-Fi devices through a radio wave. Some Wi-Fi devices are directly connected to a wide area network (wide area network, WAN), and these Wi-Fi devices may be referred to as access points (access points, APs). Some other Wi-Fi devices access the WAN through APs, and these Wi-Fi devices may be referred to as stations (stations, STAs). For example, when a mobile phone accesses the WAN through a router, the mobile phone is a STA, and the router is an AP.

When the mobile phone accesses the WAN through the router, a network fault may occur. Consequently, the mobile phone cannot access the WAN normally. The network fault may occur on the mobile phone, or may occur on the router or a server. A user usually needs to use a network fault detection tool to determine a location of the network fault. For example, the user may access a web page of which internet protocol (internet protocol, IP) address is 192.168.1.1, and then determine the location of the network fault by using a fault detection tool in the web page. The user may alternatively determine the location of the network fault by using a network fault detection application (application, app).

However, in the foregoing network fault detection method, the user needs to have some professional knowledge. Because most users do not have professional knowledge, the users may consider that the network fault is caused by a product disadvantage of the mobile phone or the router. This causes an unnecessary reputation loss to a mobile phone vendor and a router vendor.

### SUMMARY

This application provides a method and an apparatus for sending or displaying a network detection result, a computer program product, and a computer-readable storage medium, so that a user can determine a cause of a network fault when the user does not have professional knowledge. This avoids an unnecessary reputation loss of a mobile phone vendor and a router vendor.

According to a first aspect, a method for sending a network detection result is provided. The method includes: An AP receives fault indication information from a STA, where the fault indication information indicates that a network fault occurs on the STA; the AP obtains a network detection result; and the AP sends the network detection result to the STA based on the fault indication information.

When the AP receives the fault indication information, it indicates that the network fault has occurred on the STA. The network fault may be caused by an operator, or may be caused by incorrect internet access parameter setting. The AP may send the network detection result to the STA based on triggering of the fault indication information, to help the STA display the network detection result to a user. In the foregoing solution, the fault indication information is automatically generated after the network fault occurs on the STA, and no user operation is required, so that the user can determine a cause of the network fault when the user does not have professional knowledge. This avoids an unnecessary reputation loss of a mobile phone vendor and a router vendor.

Optionally, the network detection result includes a detection result of a fixed network or an access network, and that the AP obtains the network detection result includes: The AP performs network detection before receiving the fault indication information, to obtain the detection result of the fixed network or the access network.

The fixed network may be a fiber network or a cable network connected to the AP, or may be a network such as a core network. The access network may be a wireless network such as a cellular network connected to the AP. For the fixed network or the access network, the AP can perform detection without waiting for discovering the AP, that is, the AP may perform network detection before receiving the fault indication information. In this way, after discovering the STA, the AP may send the detection result to the STA as soon as possible. If the detection result indicates that a serious fault (for example, a network disconnection) exists in the fixed network or the access network, the STA may cancel an authentication step and an association step after receiving the detection result, to avoid a meaningless step, so as to reduce resource (signaling and power) overheads.

Optionally, that the AP sends the network detection result to the STA based on the fault indication information includes: The AP sends, based on the fault indication information, the network detection result to the STA before allocating an IP address to the STA.

The AP may perform network detection before discovering the STA, or may perform network detection after discovering the STA. The AP obtains the detection result after network detection, and sends the detection result to the STA before allocating the IP address to the STA. For example, the AP may send the detection result to the STAin a scanning phase, an authentication phase, or an association phase. In this way, although a communication function between the AP and the STA is incomplete (for example, the STA cannot obtain the IP address), the STA can still determine the cause of the network fault, to avoid the unnecessary reputation loss of the mobile phone vendor and the router vendor. In addition, if the STA determines a location of the network fault by using a web page or an app, the STA can obtain the detection result only after obtaining the IP address. However, according to the method provided in this application, the STA can obtain the detection result before obtaining the IP address, so that a rate at which the STA determines a location of the network fault is improved.

Optionally, the network detection result is carried in a beacon (beacon) frame.

The beacon frame includes a vendor-specific (vendor-specific) field. The field is used to carry the network detection result, and no proprietary protocol needs to be developed, so that implementation costs of this application can be reduced.

According to a second aspect, a method for displaying a network detection result is provided. The method includes: A STA sends fault indication information to an AP, where the fault indication information indicates that a network fault occurs on the STA; the STA receives a network detection result from the AP, where the network detection result indicates a cause of the network fault; and the STA displays the network detection result.

When the network fault occurs on the STA, the network fault may be caused by an operator, or may be caused by incorrect internet access parameter setting. After receiving the network detection result from the AP, the STA displays the network detection result to a user. In the foregoing solution, the fault indication information is automatically generated after the network fault occurs on the STA, and no user operation is required, so that the user can determine a cause of the network fault when the user does not have professional knowledge. This avoids an unnecessary reputation loss of a mobile phone vendor and a router vendor.

The STA displays a solution corresponding to the network detection result.

Some network faults may be resolved by simple operations of the user. For example, if the network detection result is that a WAN port of the AP is disconnected, the STA may prompt the user to check whether an optical fiber interface is loose, so that some network faults can be quickly resolved, to improve user satisfaction.

Optionally, that the STA receives the network detection result from the AP includes: The STA receives the network detection result from the AP before obtaining an IP address from the AP.

The AP may perform network detection before discovering the STA, or may perform network detection after discovering the STA. The AP obtains the detection result after network detection, and sends the detection result to the STA before allocating the IP address to the STA. For example, the AP may send the detection result to the STAin a scanning phase, an authentication phase, or an association phase. In this way, although a communication function between the AP and the STA is incomplete (for example, the STA cannot obtain the IP address), the STA can still determine a location of the network fault, to avoid the unnecessary reputation loss of the mobile phone vendor and the router vendor. In addition, if the STA determines the location of the network fault by using a web page or an app, the STA can obtain the detection result only after obtaining the IP address. However, according to the method provided in this application, the STA can obtain the detection result before obtaining the IP address, so that a rate at which the STA determines a location of the network fault is improved.

Optionally, the network detection result is carried in a beacon frame.

The beacon frame includes a vendor-specific field. The field may be used to carry the network detection result, and no proprietary protocol needs to be developed, so that implementation costs of this application can be reduced.

According to a third aspect, an apparatus for sending a network detection result is provided. The apparatus includes a unit configured to perform any method in the first aspect. The apparatus may be a terminal device, or may be a chip in the terminal device. The apparatus may include a sending unit and a processing unit.

When the apparatus is the terminal device, the processing unit may be a processor, and the sending unit may be an antenna. The terminal device may further include a memory. The memory is configured to store computer program code. When the processor executes the computer program code stored in the memory, the terminal device is enabled to perform any method in the first aspect.

When the apparatus is the chip in the terminal device, the processing unit may be a processing unit inside the chip, and the sending unit may be an output interface, a pin, a circuit, or the like. The chip may further include a memory. The memory may be a memory (for example, a register or a cache) inside the chip, or may be a memory (for example, a read-only memory or a random access memory) outside the chip. The memory is configured to store computer program code, and when the processor executes the computer program code stored in the memory, the chip is enabled to perform any method in the first aspect.

According to a fourth aspect, an apparatus for displaying a network detection result is provided. The apparatus includes a unit configured to perform any method in the second aspect. The apparatus may be a terminal device, or may be a chip in the terminal device. The apparatus may include a receiving unit and a processing unit.

When the apparatus is the terminal device, the processing unit may be a processor, and the receiving unit may be an antenna. The terminal device may further include a memory. The memory is configured to store computer program code. When the processor executes the computer program code stored in the memory, the terminal device is enabled to perform any method in the second aspect.

When the apparatus is the chip in the terminal device, the processing unit may be a processing unit inside the chip, and the receiving unit may be an input interface, a pin, a circuit, or the like. The chip may further include a memory. The memory may be a memory (for example, a register or a cache) inside the chip, or may be a memory (for example, a read-only memory or a random access memory) outside the chip. The memory is configured to store computer program code, and when the processor executes the computer program code stored in the memory, the chip is enabled to perform any method in the second aspect.

According to a fifth aspect, a computer-readable storage medium is provided. The computer-readable storage medium stores computer program code. When the computer program code is run by an apparatus for sending a network detection result, the apparatus is enabled to perform any method in the first aspect.

According to a sixth aspect, a computer-readable storage medium is provided. The computer-readable storage medium stores computer program code. When the computer program code is run by an apparatus for displaying a network detection result, the apparatus is enabled to perform any method in the second aspect.

According to a seventh aspect, a computer program product is provided. The computer program product includes computer program code. When the computer program code is run by an apparatus for sending a network detection result, the apparatus is enabled to perform any method in the first aspect.

According to an eighth aspect, a computer program product is provided. The computer program product includes computer program code. When the computer program code is run by an apparatus for displaying a network detection result, the apparatus is enabled to perform any method in the second aspect.

### BRIEF DESCRIPTION OF DRAWINGS

FIG. 1 is a schematic diagram of a communication system applicable to this application;
FIG. 2 is a schematic diagram of a wireless access process according to this application;
FIG. 3 is a schematic diagram of a passive scanning method according to this application;
FIG. 4 is a schematic diagram of an active scanning method according to this application;
FIG. 5 is a schematic diagram of an authentication method according to this application;
FIG. 6 is a schematic diagram of another authentication method according to this application;
FIG. 7 is a schematic diagram of an association method according to this application;
FIG. 8 is a schematic diagram of a method for sending and displaying a network detection result according to this application;
FIG. 9 is a schematic diagram of a format of a vendor-specific element according to this application;
FIG. 10 is a schematic diagram of an interface for displaying a network detection result according to this application;
FIG. 11 is a schematic diagram of another interface for displaying a network detection result according to this application;
FIG. 12 is a schematic diagram of still another interface for displaying a network detection result according to this application;
FIG. 13 is a schematic diagram of an apparatus for sending a network detection result according to this application;
FIG. 14 is a schematic diagram of an apparatus for displaying a network detection result according to this application; and
FIG. 15 is a schematic diagram of an electronic device according to this application.

### DESCRIPTION OF EMBODIMENTS

The following describes technical solutions in embodiments in this application with reference to accompanying drawings.

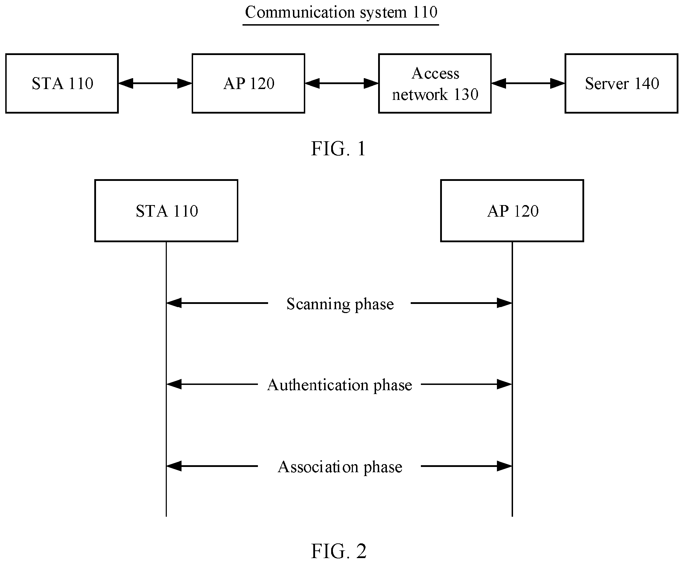

FIG. 1 is a schematic diagram of a communication system applicable to this application.

The communication system 100 includes a STA 110, an AP 120, an access network 130, and a server 140. Information is transmitted between the STA 110 and the AP 120 through a radio wave, information is transmitted between the AP 120 and the access network 130 by using an optical fiber, a cable, or a radio signal, and information is transmitted between the access network 130 and the server 140 by using a fixed network such as an optical fiber or a cable.

In this application, the STA 110 may be a handheld device, a vehicle-mounted device, or a wearable device having a wireless communication function, for example, user equipment (user equipment, UE) or a mobile station (mobile station, MS) defined by the 3^{rd} generation partnership project (3^{rd} generation partnership project, 3GPP).

The AP 120 provides a wireless access service for the STA 110. The AP 120 may be a router, or may be a mobile phone or another electronic device that works in an AP mode.

The access network 130 may be a radio access network or a wired access network that meets a 3GPP requirement.

The server 140 is configured to provide a computing service or an application service for the STA 110.

It should be noted that the communication system 100 is an example of a communication system applicable to this application, and the communication system applicable to this application may be further divided into more specific structures.

Before communicating with the server 140, the STA 110 needs to first establish a communication connection to the AP 120. A process of establishing the communication connection is a wireless access process. The wireless access process may be divided into three phases: a scanning phase, an authentication phase, and an association phase. The following briefly describes the three phases with reference to FIG. 2.

### 1. Scanning phase

The scanning phase is a phase in which the STA 110 and the AP 120 discover each other. From a perspective of the STA 110, there are two manners of discovering the AP 120. One is passive scanning, and the other is active scanning.

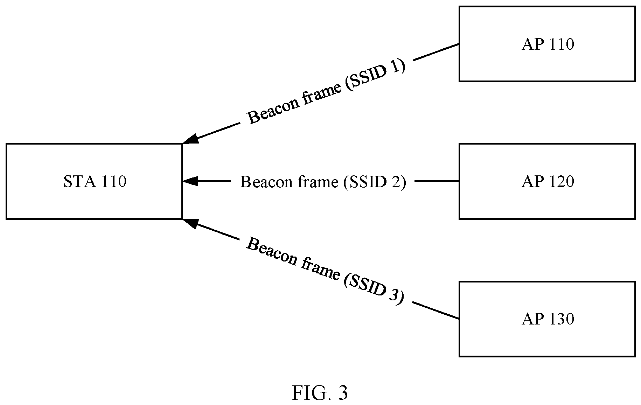

The passive scanning means a process in which the STA 110 discovers a surrounding AP by listening to a beacon frame. FIG. 3 shows a signaling procedure of the passive scanning.

An AP (such as an AP 110, the AP 120, and an AP 130) that provides a wireless network periodically sends a beacon frame, and each beacon frame includes a service set identifier (service set identifier, SSID) of an AP that sends the beacon frame. For example, a beacon frame sent by the AP 110 includes an SSID 1, a beacon frame sent by the AP 120 includes an SSID 2, and a beacon frame sent by the AP 130 includes an SSID 3. The STA 110 may listen to the beacon frame on a supported channel, to obtain information about a surrounding wireless network, so as to discover the AP 120.

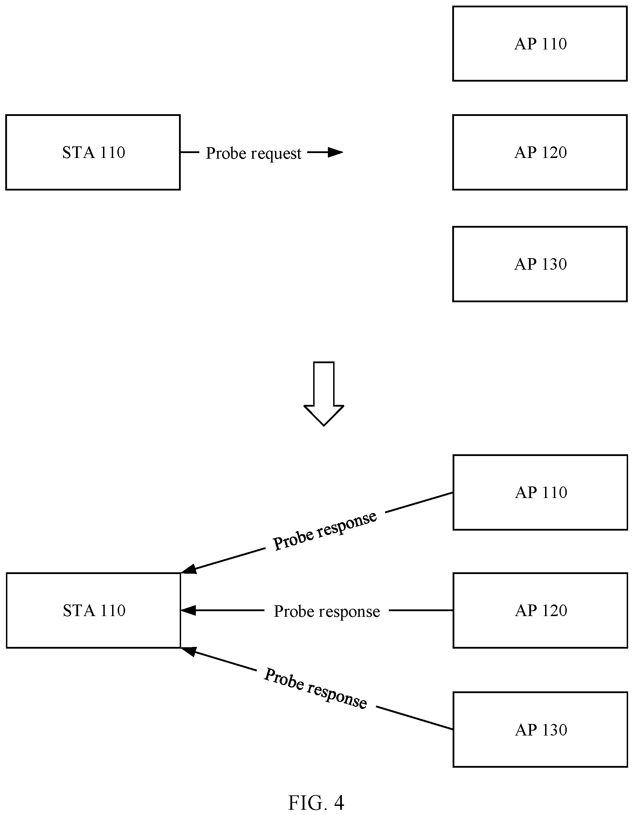

The active scanning means a process in which the STA 110 sends a probe request (Probe Request) on a channel supported by the STA 110, and discovers a surrounding AP based on a received probe response (Probe Response). FIG. 4 shows a signaling procedure of the active scanning.

The STA 110 sends a probe request carrying an SSID field, and the SSID field may be an SSID of the AP 120, or may be empty. The former is a specified scanning mode, and the latter is a broadcast scanning mode. If the STA 110 sends the probe request in the broadcast scanning mode, all APs (for example, the AP 110, the AP 120, and the AP 130) that receive the probe request send probe responses to the STA 110, so that the STA 110 discovers the surrounding AP.

### 2. Authentication phase

The authentication phase is a phase in which the AP 120 verifies whether an identity of the STA 110 is valid. The STA 110 may select a proper AP from surrounding APs to perform identity authentication. For example, the STA 110 may choose to perform identity authentication with the AP 120. Based on setting of the AP 120, the STA 110 may perform two-step authentication or four-step authentication.

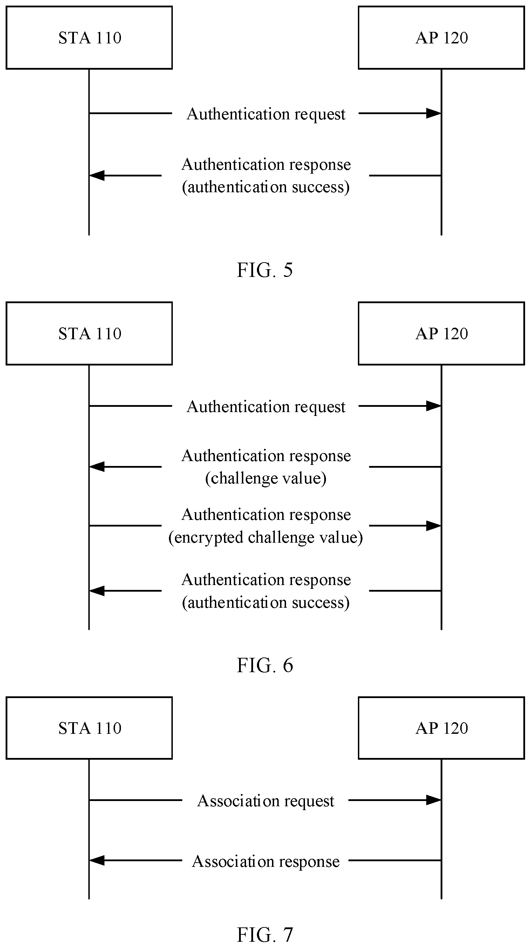

The two-step authentication is open-system authentication (Open-system Authentication). FIG. 5 shows a signaling procedure of the open-system authentication.

The STA 110 may send, to the AP 120, an authentication request (Authentication Request) that does not include information such as a user name.

After receiving the authentication request, the AP 120 returns an authentication response (Authentication Response), and sets a status code (status code) field of the authentication response to an authentication success state.

The four-step authentication is shared-key authentication (Shared-key Authentication). FIG. 6 shows a signaling procedure of the shared-key authentication.

The STA 110 first sends an authentication request to the AP 120.

After receiving the authentication request, the AP 120 randomly generates a challenge (Challenge) value, and sends the challenge value to the STA 110 by using the authentication response.

The STA 110 encrypts the challenge value by using a preset key, and sends an encrypted challenge (Encrypted Challenge) value to the AP 120 by using the authentication response.

The AP 120 decrypts the encrypted challenge value by using a key of the AP 120. If the key of the STA 110 is the same as the key of the AP 120, a challenge value decrypted by the AP 120 is the same as the challenge value generated by the AP 120. In this case, the AP 120 determines that the authentication succeeds, and sends an authentication response including authentication success information to the STA 110. If the key of the STA 110 is different from the key of the AP 120, a challenge value decrypted by the AP 120 is different from the challenge value generated by the AP 120. In this case, the AP 120 determines that the authentication fails, and sends an authentication response including authentication failure information to the STA 110.

If the STA 110 is successfully authenticated, the wireless access process may enter a next phase.

### 3. Association phase

The association phase is a negotiation phase of a link layer. In this phase, the STA 110 and the AP 120 may determine link layer configuration parameters based on respective capabilities of the STA 110 and the AP 120. Figure 7 shows a signaling procedure of the association phase.

The STA 110 sends an association request (Association Request) to the AP 120, and the association request carries various parameters of the STA 110 and a parameter selected based on a service configuration, for example, parameters such as a transmission rate supported by the STA 110, a signal, quality of service (quality of service, QoS), and an encryption algorithm selected by the STA 110.

After receiving the association request, the AP 120 may send an association response (Association Response) based on a capability of the AP 120, to indicate whether the parameter in the association request is accepted.

The wireless access process is merely an example, and a wireless access process applicable to this application is not limited thereto. For example, a Wi-Fi protected access pre-shared key (Wi-Fi protected access pre-shared key, WPA-PSK) authentication method or an extensible authentication protocol (extensible authentication protocol, EAP) authentication method may be further used in the authentication phase.

Due to complexity of the communication system, a network fault may occur in each link of the communication system 100, and consequently, the STA 110 cannot normally use a network.

For example, when a task amount of the server 140 is excessive, the STA 110 cannot browse a web page; when the access network 130 is faulty, broadband dial-up may fail; and when a WAN port of the AP 120 is in a disconnected state, or a media access control (media access control, MAC) address of the STA 110 is not in an internet access trustlist of the AP 120, the STA 110 cannot normally use a network.

When a user uses the STA 110 and encounters the network fault, some users can use an app or a web page to determine a location of the network fault, and some other users (for example, the elderly) even cannot use the app or the web page to determine a cause of the network fault. Even if some users can use the app or the web page to determine the cause of the network fault, if a communication function between the STA 110 and the AP 120 is incomplete (for example, the STA 110 cannot obtain an IP address), and the mobile phone cannot open the web page or the app, these users cannot determine the cause of the network fault.

The user is usually a person without professional knowledge. When the user cannot determine the cause of the network fault, the user usually suspects that a device (that is, the STA 110 and the AP 120) seen in sight is faulty, and this causes an unnecessary reputation loss of a STA vendor and an AP vendor.

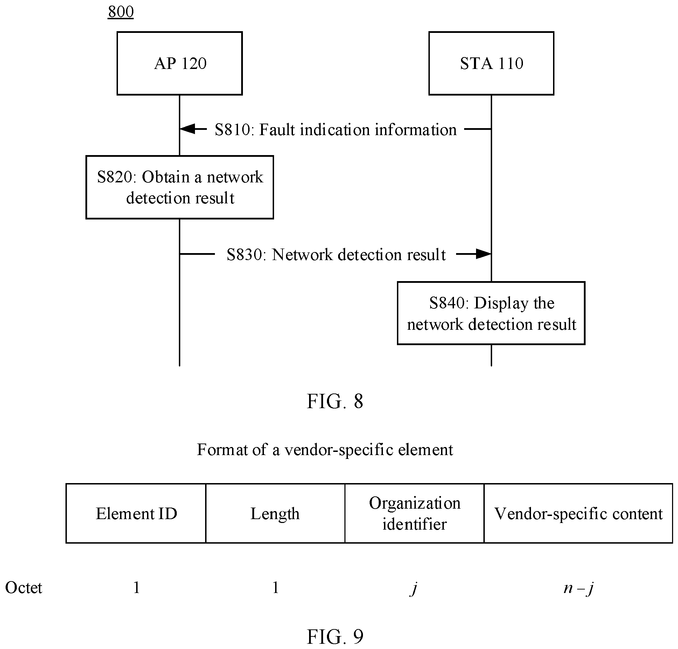

This application provides a method, so that a user can determine a cause of a network fault when the user does not have professional knowledge. This avoids an unnecessary reputation loss of a mobile phone vendor and a router vendor. As shown in FIG. 8, a method 800 includes the following content.

S810: An AP 120 receives fault indication information from a STA 110, where the fault indication information indicates that a network fault occurs on the STA 110.

The fault indication information may be a bit in a probe request, an authentication request, an association request, or an IP packet. When the bit is set to 0, it indicates that no network fault currently occurs on the STA 110; or when the bit is set to 1, it indicates that a network fault currently occurs on the STA 110. A specific form of the fault indication information is not limited in this application.

S820: The AP 120 obtains a network detection result.

S830: The AP 120 sends the network detection result to the STA 110 based on the fault indication information.

The AP 120 may perform network detection before receiving the fault indication information, or may perform, based on triggering of the fault indication information, network detection after receiving the fault indication information. An occasion of network detection is not limited in this application. After obtaining the network detection result, the AP 120 sends the network detection result to the STA 110 based on triggering of the fault indication information. In the foregoing solution, the fault indication information is automatically generated after the network fault occurs on the STA 110, and no user operation is required, so that a user can determine a cause of the network fault when the user does not have professional knowledge. This avoids an unnecessary reputation loss of a mobile phone vendor and a router vendor.

Optionally, the AP 120 may perform network detection before discovering the STA 110, or may perform network detection after discovering the STA 110. The following separately describes the two cases.

Case 1: The AP 120 performs network detection before discovering the STA 110.

For some network faults (for example, an access network fault and a fixed network fault) that can be detected without participation of the STA 110, the AP 120 may perform network detection before discovering the STA 110, to quickly notify the STA 110.

For example, the STA 110 does not need to participate in detection of a WAN port status, a broadband dial-up status, and a network connectivity status, and the AP 120 may perform detection and obtain a detection result before discovering the STA 110.

The WAN port status may be determined based on an interrupt event indicating connection and disconnection of a WAN port. Connection and disconnection of the WAN port trigger the WAN port circuit to report the interrupt event. If a recently reported interrupt event indicates that a status of the WAN port is a connected state, the AP 120 may determine that a current status of the WAN port is the connected state. If a recently reported interrupt event indicates that a status of the WAN port is a disconnected state, the AP 120 may determine that the current status of the WAN port is the disconnected state.

The broadband dial-up status can be determined through account login. If the broadband account login succeeds, the AP 120 may determine that a broadband dial-up state is normal; or if the broadband account login fails, the AP 120 may determine that a broadband dial-up state is abnormal.

The network connectivity status may be determined based on a ping response of a network address. The AP 120 may send a ping data packet to a network address. If the AP 120 receives a ping response of the network address before a preset moment arrives, it may be determined that the network connectivity status is a normal state. If the AP 120 does not receive the ping response of the network address before the preset moment arrives, it may be determined that the network connectivity status is an abnormal state.

After discovering the STA 110, the AP 120 may send a fault detection result of the access network or the fixed network to the STA 110 as soon as possible.

For example, the AP 120 may write, into a probe response, indication information indicating the detection result. If the indication information indicates that the access network or the fixed network is in a normal state, the STA 110 may continue to perform steps of the authentication phase and the association phase. If the indication information indicates that a serious fault (for example, a network disconnection) exists in the access network or the fixed network, the STA 110 may no longer perform the steps of the authentication phase and the association phase, to avoid a meaningless step, so as to reduce resource (signaling and power) overheads.

Case 2: The AP 120 performs network detection after discovering the STA 110.

For some network faults that need to be detected with participation of the STA 110, the AP 120 may perform network detection after discovering the STA 110.

For example, an internet access trustlist is set on the AP 120, and only a STA of which MAC address is in the internet access trustlist can access a network through the AP 120. The AP 120 may obtain a MAC address of the STA 110 from a frame (for example, a probe request) sent by the STA 110. If the MAC address of the STA 110 matches the MAC address in the internet access trustlist, the AP 120 may send, to the STA 110, indication information indicating that internet access trustlist verifies successfully. If the MAC address of the STA 110 does not match the MAC address in the internet access trustlist, the AP 120 may send, to the STA 110, indication information indicating that the internet access trustlist verifies unsuccessfully.

In addition to the several examples of network fault detection, the network fault may be detected in another method. The network fault detection method is not limited in this application. In addition, the network detection result may alternatively be notified to the STA 110 by using another message. The following further describes an embodiment in which the network detection result is transmitted by using a beacon frame.

The beacon frame includes a vendor-specific element, and the vendor-specific element may be filled with user-defined information. The field is used to carry the network detection result, and no proprietary protocol needs to be developed, so that implementation costs of this application can be reduced.

FIG. 9 shows a format of the vendor-specific element. The vendor-specific element includes the following four fields: an element identifier (identifier, ID), a length, an organization identifier (organization identifier), and vendor-specific content (vendor-specific content), where the element ID and the length each occupy one octet (octet), the organization identifier occupies *j* octets, the vendor-specific content occupies *n-j* octets, *j* is a positive integer, and *j* ≤ *n* ≤ 255.

The vendor-specific element is used to carry, in a separately defined format, information that is not defined in a Wi-Fi standard. This ensures that reserved element IDs are not occupied by non-standard purposes and that interoperability (interoperability) in the presentation of non-standard information is easier to implement.

The length field indicates a length of a vendor-specific field.

For a meaning of the organization identifier field, refer to the part 8.4.1.31 in the IEEE 802.11 standard. In addition, a sequence (order) of the field is described in the part 8.2.2 in the IEEE 802.11 standard.

A vendor-specific content field may carry indication information indicating the network detection result.

For example, one octet of the vendor-specific content field may carry 255 codes (that is, 255 pieces of indication information), and each code may indicate a network detection result. If the network detection result is that the WAN port is disconnected, the detection result may be indicated by using a code "1"; if the network detection result is that the STA 110 is not in the internet access trustlist of the AP 120, the detection result may be indicated by using a code "2"; if the network detection result is that broadband dial-up fails, the detection result may be indicated by using a code "3"; or if the network detection result is that network connectivity is abnormal, the detection result may be indicated by using a code "4".

After generating the beacon frame that carries the indication information, the AP 120 sends the beacon frame to the STA 110 before allocating an IP address to the STA 110.

For example, the AP 120 may send the beacon frame to the STA 110 in the scanning phase, the authentication phase, or the association phase. The AP 120 does not obtain the IP address in the scanning phase, the authentication phase, or the association phase. After receiving the beacon frame, the STA 110 determines the network detection result based on the indication information carried in the beacon frame, and performs the following steps.

S840: The STA 110 displays the network detection result.

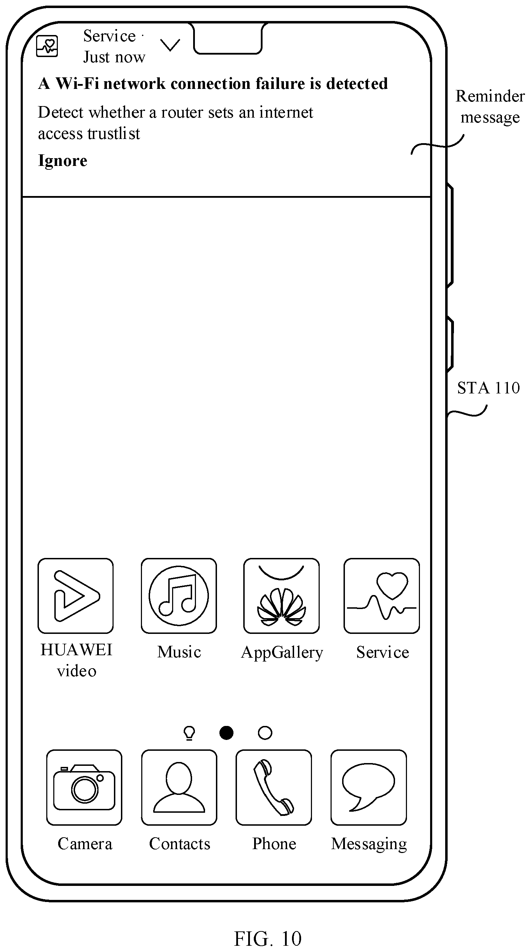

The STA 110 may display the network detection result to the user by using a text, a picture, or a language. FIG. 10 to FIG. 12 are examples of several manners of displaying network detection results according to this application.

When the network detection result is that the STA 110 is not in the internet access trustlist of the AP 120, the STA 110 may display an interface shown in FIG. 10. In the interface, the STA 110 displays the detection result to the user by using a reminder message of a service app (hicare), a title of the reminder message is "A Wi-Fi network connection failure is detected", and content of the reminder message includes "Detect whether a router sets an internet access trustlist".

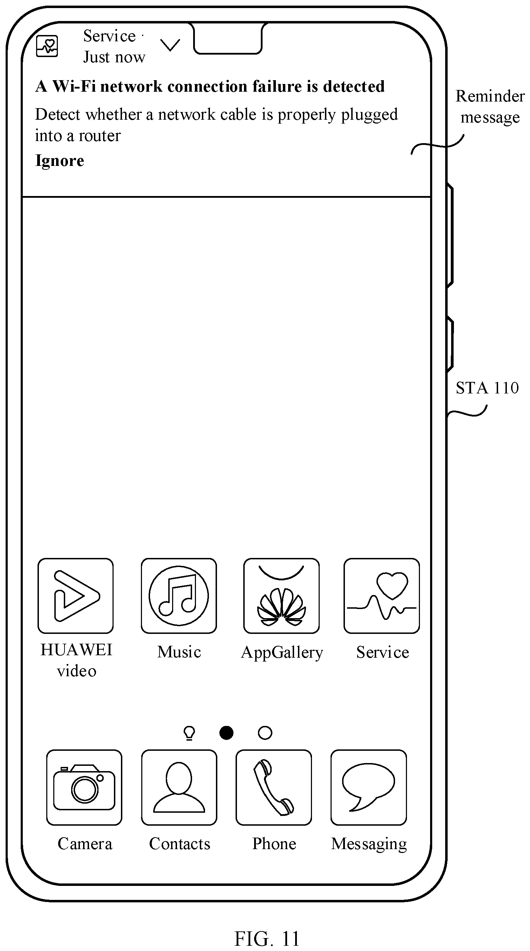

When the network detection result is that the WAN port is abnormal, the STA 110 may display an interface shown in FIG. 11. In the interface, the STA 110 displays the detection result to the user by using a reminder message of a service app (hicare), a title of the reminder message is "A Wi-Fi network connection failure is detected", and content of the reminder message includes "Detect whether a network cable is properly plugged into a router". The content of the reminder message is used to guide the user to check an optical fiber interface of the router, so that some network faults can be quickly resolved, to improve user satisfaction.

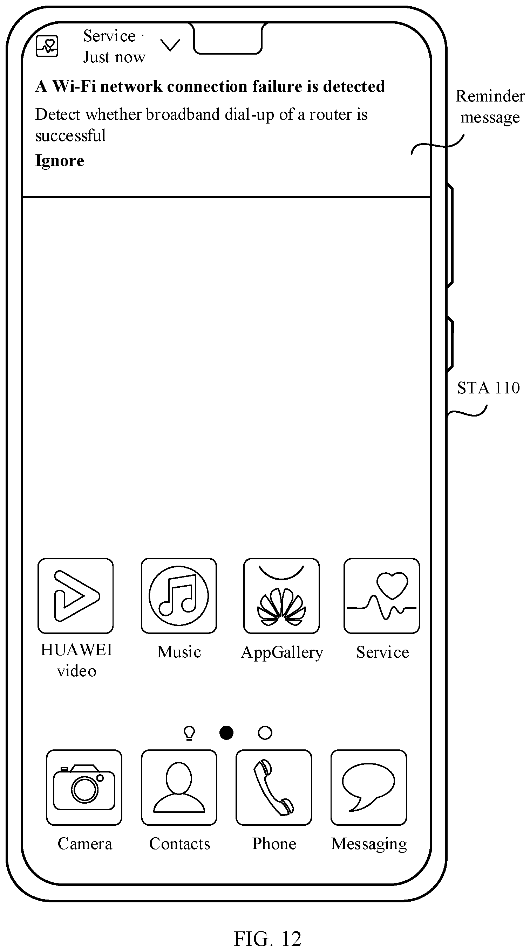

When the network detection result is that the broadband dial-up state is abnormal, the STA 110 may display an interface shown in FIG. 12. In the interface, the STA 110 displays the detection result to the user by using a reminder message of a service app (hicare), a title of the reminder message is "A Wi-Fi network connection failure is detected", and content of the reminder message includes "Detect whether broadband dial-up of a router is successful".

The user may clearly determine a location of the network fault based on the interfaces shown in FIG. 10 to FIG. 12, and attempt to resolve the network fault under guidance of the reminder message, to avoid unnecessary reputation loss of a mobile phone vendor and a router vendor.

The foregoing describes in detail examples of the method for sending and displaying the network detection result provided in this application. It may be understood that to implement the foregoing functions, the corresponding apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, an apparatus for sending and displaying a network detection result may be divided into functional units based on the foregoing method examples. For example, each function may be divided into functional units, or two or more functions may be integrated into one unit. The integrated unit may be implemented in a form of hardware, or may be implemented in a form of a software functional unit. It should be noted that, in this application, division into the units is an example, is merely logical function division. In actual implementation, another division manner may be used.

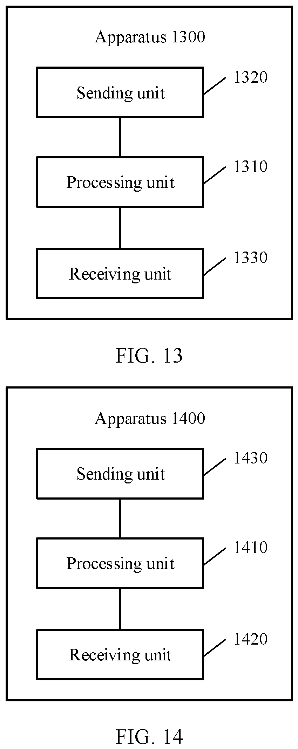

FIG. 13 is a schematic diagram of a structure of an apparatus for sending a network detection result according to this application. An apparatus 1300 includes a processing unit 1310, a sending unit 1320, and a receiving unit 1330. The sending unit 1320 can perform a sending step under control of the processing unit 1310, and the receiving unit 1330 can perform a receiving step under control of the processing unit 1310. For example,
the receiving unit 1330 is configured to receive fault indication information from a STA, where the fault indication information indicates that a network fault occurs on the STA; and
the processing unit 1310 is configured to: obtain a network detection result, and send the network detection result to the STA based on the fault indication information by using the sending unit 1320.

Optionally, the network detection result includes a detection result of a fixed network or an access network, and the processing unit 1310 is specifically configured to perform network detection before receiving the fault indication information, to obtain the detection result of the fixed network or the access network.

Optionally, the processing unit 1310 is specifically configured to send, based on the fault indication information, the network detection result to the STA before allocating an IP address to the STA.

Optionally, the network detection result is carried in a beacon frame.

For a specific manner in which the apparatus 1300 performs the method for sending the network detection result and generated beneficial effects, refer to the related description in the method embodiments.

FIG. 14 is a schematic diagram of a structure of an apparatus for displaying a network detection result according to this application. An apparatus 1400 includes a processing unit 1410, a receiving unit 1420, and a sending unit 1430. The receiving unit 1420 can perform a receiving step under control of the processing unit 1410, and the sending unit 1430 can perform a sending step under control of the processing unit 1410. For example,
the sending unit 1430 is configured to send fault indication information to an AP, where the fault indication information indicates that a network fault occurs on the apparatus 1400;
the receiving unit 1420 is configured to receive a network detection result from the AP, where the network detection result indicates a cause of the network fault; and
the processing unit 1410 is configured to display the network detection result.

Optionally, the processing unit 1410 is further configured to display a solution corresponding to the network detection result.

Optionally, the receiving unit 1420 is specifically configured to receive the network detection result from the AP before obtaining the IP address from the AP.

Optionally, the network detection result is carried in a beacon frame.

For a specific manner in which the apparatus 1400 performs the method for displaying the network detection result and generated beneficial effects, refer to the related description in the method embodiments.

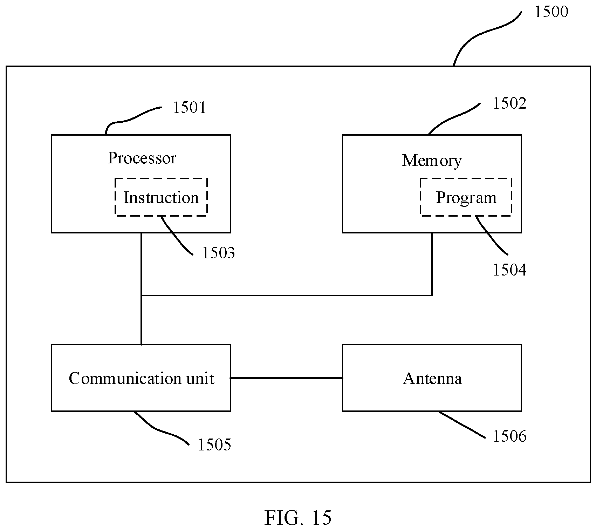

FIG. 15 is a schematic diagram of a structure of an electronic device according to this application. A dashed line in FIG. 15 indicates that this unit or this module is optional. A device 1500 may be configured to implement the method described in the method embodiments. The device 1500 may be a terminal device (for example, an AP or a STA) or a chip.

The device 1500 includes one or more processors 1501. The one or more processors 1501 may support the device 1500 in implementing the method in the method embodiments. The processor 1501 may be a general-purpose processor, or a dedicated processor. For example, the processor 1501 may be a central processing unit (central processing unit, CPU), a digital signal processor (digital signal processor, DSP), an application-specific integrated circuit (application-specific integrated circuit, ASIC), a field programmable gate array (field programmable gate array, FPGA), or another programmable logic device, such as a discrete gate or transistor logic device, or a discrete hardware component.

The processor 1501 may be configured to: control the device 1500, execute a software program, and process data of the software program. The device 1500 may further include a communication unit 1505, configured to implement signal input (receiving) and output (sending).

For example, the device 1500 may be a chip, and the communication unit 1505 may be an input circuit and/or an output circuit of the chip. Alternatively, the communication unit 1505 may be a communication interface of the chip, and the chip may be used as a component of the terminal device or another electronic device.

For another example, the device 1500 may be a terminal device, and the communication unit 1505 may be a transceiver of the terminal device, or the communication unit 1505 may be a transceiver circuit of the terminal device.

The device 1500 may include one or more memories 1502. The memory 1502 stores a program 1504. The program 1504 may be run by the processor 1501 to generate instructions 1503, to enable the processor 1501 to perform, based on the instructions 1503, the method described in the foregoing method embodiments. Optionally, the memory 1502 may further store data. Optionally, the processor 1501 may further read data (for example, a network detection result) stored in the memory 1502. The data and the program 1504 may be stored at a same storage address, or the data and the program 1504 may be stored at different storage addresses.

The processor 1501 and the memory 1502 may be disposed separately, or may be integrated together, for example, integrated into a system on chip (system on chip, SOC) in the terminal device.

The device 1500 may further include an antenna 1506. The communication unit 1505 is configured to implement a receiving and sending function of the device 1500 through the antenna 1506.

This application further provides a computer program product. When the computer program product is executed by the processor 1501, the method according to any one of the method embodiments of this application is implemented.

The computer program product may be stored in the memory 1502, for example, is the program 1504. After processing processes such as preprocessing, compilation, assembly, and linking, the program 1504 is finally converted into an executable target file that can be executed by the processor 1501.

This application further provides a computer-readable storage medium. The computer-readable storage medium stores a computer program. When the computer program is executed by a computer, the method according to any one of the method embodiments of this application is implemented. The computer program may be a high-level language program, or may be an executable target program.

The computer-readable storage medium is, for example, the memory 1502. The memory 1502 may be a volatile memory or a non-volatile memory, or the memory 1502 may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It may be clearly understood by a person skilled in the art that for ease and brevity of description, for a detailed working process and generated technical effects of the apparatus and the device described above, refer to the corresponding process and technical effects in the foregoing method embodiments. Details are not described herein.

In the several embodiments provided in this application, the disclosed system, apparatus, and method may be implemented in other manners. For example, some features of the method embodiments described above may be ignored or not performed. The described apparatus embodiments are merely examples. Division into the units is merely logical function division and may be other division in actual implementation. A plurality of units or components may be combined or integrated into another system. In addition, coupling between the units or coupling between the components may be direct coupling or indirect coupling, and the coupling may include an electrical connection, a mechanical connection, or another form of connection.

It should be understood that in various embodiments of this application, sequence numbers of the processes do not mean execution sequences. The execution sequences of the processes should be determined based on functions and internal logic of the processes, and should not be construed as any limitation on the implementation processes of embodiments of this application.

In addition, the terms "system" and "network" may be used interchangeably in this specification. The term "and/or" in this specification is merely an association relationship for describing associated objects, and represents that three relationships may exist. For example, A and/or B may represent the following three cases: Only A exists, both A and B exist, and only B exists. In addition, the character "/" in this specification generally indicates an "or" relationship between the associated objects.

In conclusion, the foregoing descriptions are merely examples of embodiments of the technical solutions in this application, but are not intended to limit the protection scope of this application. Any modification, equivalent replacement, or improvement made without departing from the spirit and principle of this application shall fall within the protection scope of this application.

## Claims

1. A method for sending a network detection result, comprising:
receiving, by an access point AP, fault indication information from a station STA, wherein the fault indication information indicates that a network fault occurs on the STA;
obtaining, by the AP, a network detection result; and
sending, by the AP, the network detection result to the STA based on the fault indication information.

2. The method according to claim 1, wherein the network detection result comprises a detection result of a fixed network or an access network, and the obtaining, by the AP, a network detection result comprises:
performing, by the AP, network detection before receiving the fault indication information, to obtain the detection result of the fixed network or the access network.

3. The method according to claim 1 or 2, wherein the sending, by the AP, the network detection result to the STA based on the fault indication information comprises:
sending, by the AP based on the fault indication information, the network detection result to the STA before allocating an internet protocol IP address to the STA.

4. The method according to any one of claims 1 to 3, wherein the network detection result is carried in a beacon frame.

5. A method for displaying a network detection result, comprising:
sending, by a station STA, fault indication information to an access point AP, wherein the fault indication information indicates that a network fault occurs on the STA;
receiving, by the STA, a network detection result from the AP, wherein the network detection result indicates a cause of the network fault; and
displaying, by the STA, the network detection result.

6. The method according to claim 5, further comprising:
displaying, by the STA, a solution corresponding to the network detection result.

7. The method according to claim 5 or 6, wherein the receiving, by the STA, a network detection result from the AP comprises:
receiving, by the STA, the network detection result from the AP before obtaining an internet protocol IP address from the AP.

8. The method according to any one of claims 5 to 7, wherein the network detection result is carried in a beacon frame.

9. An apparatus for sending a network detection result, wherein the apparatus comprises a processor and a memory, the memory is configured to store a computer program, and the processor is configured to invoke the computer program from the memory and run the computer program, to enable the apparatus to perform the method according to any one of claims 1 to 4.

10. An apparatus for displaying a network detection result, wherein the apparatus comprises a processor and a memory, the memory is configured to store a computer program, and the processor is configured to invoke the computer program from the memory and run the computer program, to enable the apparatus to perform the method according to any one of claims 5 to 8.

11. A chip, comprising a processor, wherein when the processor executes instructions, the processor performs the method according to any one of claims 1 to 4, or the chip is enabled to perform the method according to any one of claims 5 to 8.

12. A computer-readable storage medium, wherein the computer-readable storage medium stores a computer program, and when the computer program is executed by a processor, the processor is enabled to perform the method according to any one of claims 1 to 4, or the processor is enabled to perform the method according to any one of claims 5 to 8.
